Europäisches Patentamt

European Patent Office

Office européen des brevets

(19)

(11) Veröffentlichungsnummer: **0 128 376**
A1

(12) # EUROPÄISCHE PATENTANMELDUNG

(21) Anmeldenummer: 84105400.0

(22) Anmeldetag: 12.05.84

(51) Int. Cl.³: **C 05 G 1/00,** C 05 G 3/00

---

(30) Priorität: 08.06.83 DE 3321053

(71) Anmelder: SCHERING AKTIENGESELLSCHAFT Berlin und Bergkamen,
Müllerstrasse 170/178 Postfach 65 03 11,
D-1000 Berlin 65 (DE)

(43) Veröffentlichungstag der Anmeldung: 19.12.84
Patentblatt 84/51

(72) Erfinder: Eibner, Robert, Dr., Breddert 55, D-4010 Hilden (DE)
Erfinder: Kohl, Wilhelm, Dr., Neusser Strasse 74, D-4047 Dormagen 11 (DE)
Erfinder: Kioth, Bernhard, Dr., Schirmerstrasse 29, D-5000 Köln 30 (DE)
Erfinder: Jaschkowitz, Michael, Pastorsbusch 51, D-4154 Tönisvorst 1 (DE)
Erfinder: Born, Hans-Ulrich, Dr., Schützenstrasse 2, D-4000 Düsseldorf 1 (DE)

(84) Benannte Vertragsstaaten: BE CH DE FR GB IT LI LU NL SE

---

(54) Düngemittel mit Langzeitwirkung und programmierter Nährstoffabgabe.

(57) Die Erfindung betrifft ein Düngemittel mit Langzeitwirkung und programmierter Nährstoffabgabe, dadurch gekennzeichnet, daß dieses alle für die Ernährung von Pflanzen erforderlichen Nährstoffe einer Kulturperiode in partiell oder vollständig umhüllter Form enthält sowie ein Verfahren zu seiner Herstellung und Verwendung.

EP 0 128 376 A1

Die Erfindung betrifft ein Düngemittel mit Langzeitwirkung und programmierter Nährstoffabgabe sowie ein Verfahren zu seiner Herstellung und Verwendung.

Die optimale Ernährung von Kulturpflanzen muß von der Tatsache Gebrauch machen, daß jede Kultur (Art, Sorte) hinsichtlich der Qualität und der Quantität von Nährstoffen einen spezifischen Bedarf hat. Allgemein sind junge Pflanzen stärker salzempfindlich als ältere. Mit fortschreitender Entwicklung treten dann unterschiedliche Ansprüche an Art und Menge der einzelnen Makro- beziehungsweise Mikronährstoffe auf.

So ist es heute gärtnerische Kulturpraxis, die gesamte, für eine bestimmte Kulturführung notwendige Düngermenge in Teilgaben anzuwenden. Hiermit wird angestrebt und erreicht, die Düngerverabreichung möglichst genau dem kulturspezifischen Bedarf anzupassen, schädliche Salzkonzentrationen sowie auch Mangelsituationen zu vermeiden und schließlich Düngerverluste zu minieren. Es ist anerkanntes Praxiswissen, daß somit für eine optimale Kulturführung viele Teilgaben unterschiedlicher Zusammensetzung zu verabreichen sind.

Dabei ergibt sich, daß gelöste Düngerstoffe für Unterglaskulturen besonders geeignet erscheinen. Gründe hierfür sind vollflexible Steuerbarkeit, Möglichkeit der Feinanpassung von Salzkonzentrationen und bedarfsspezifischen Nährstoff-Ansprüchen. Der Gärtner paßt sich den ihm bekannten Optimalbereichszahlen zur optimalen Versorgung der Pflanzen mit Nährstoffen durch "Handarbeit" möglichst genau an.

Trotzdem können bei dieser diskontinuierlichen Handdüngungstechnik Schwankungen im Nährstoffangebot nicht ausgeschaltet werden. Je häufiger die Nachdüngungen erfolgen, um so arbeits-

- 2 -

Vorstand: Dr. Herbert Asmis · Dr. Christian Bruhn · Hans-Jürgen Hamann
Dr. Heinz Hannse · Karl Otto Mittelstenscheid · Dr. Horst Witzel
Vorsitzender des Aufsichtsrats: Dr. Eduard v. Schwartzkoppen
Sitz der Gesellschaft: Berlin und Bergkamen
Handelsregister: AG Charlottenburg 93 HRB 283 u. AG Kamen HRB 0061

Postanschrift: SCHERING AG · D-1 Berlin 65 · Postfach 65 03 11
Postcheck-Konto: Berlin-West 1175-101, Bankleitzahl 100 100 10
Berliner Commerzbank AG, Berlin, Konto-Nr. 108 7006 00, Bankleitzahl 100 400 00
Berliner Disconto-Bank AG, Berlin, Konto-Nr. 241/5008, Bankleitzahl 100 700 00
Berliner Handels-Gesellschaft — Frankfurter Bank —, Berlin,
Konto-Nr. 14-362, Bankleitzahl 100 202 00

54 FH IV 35718

Formular-Nr.: 1438-2

intensiver sind die Methoden.

Alternativ werden zur Applikation der Dünger kostenaufwendige und empfindliche Geräte eingesetzt. Bedienung und Wartung bedingen einen hohen Ausbildungsstand und hohe Kosten.

Zur Erzielung eines gleichmäßigen Nährstoff-Angebotes über die gesamte oder über Teile der Vegetationsperiode wurden Dünger entwickelt, die nach unterschiedlichen Mechanismen Nährstoffe freisetzen. Gemeinsam ist diesen Formulierungen aber, daß keine von Ihnen in der Lage ist, aus einer einmaligen Applikationsgabe (Einmischung ins Substrat) zu Beginn des Wachstums die Pflanzen optimal über den gesamten Kulturverlauf mit Nährstoffen zu versorgen.

Entweder ist das Jungpflanzenstadium Ziel der Düngungsformulierung mit nicht ausreichendem Nährstoffangebot während der Hauptkulturzeit oder die Formulierung ist ausgelegt auf die Hauptkulturzeit und die junge Pflanze ist unterversorgt. Kein Düngemittel vermag zudem z.Zt. besonderen Anforderungen der Pflanze an die Ernährung zu genügen, die erst während der Kulturzeit auftreten.

Die unterversorgte Jungpflanze bedeutet eine träge Anlaufperiode in den ersten vier Wochen und führt zu "verlorener Kulturzeit". Ein besonderes Problem der Langzeitdünger, wie sie heute auf dem Markt angeboten werden, ist die noch kaum gelöste Frage der Spurenelement- und Magnesiumversorgung der Kulturen aus solchen Formulierungen heraus. Dieses Problem ist besonders gravierend, da eine sichere Pflanzenernährung nur bei gleichmäßiger Zuführung ausreichender Mengen harmonisch zusammengesetzter Spurenelement-Mischungen und Magnesium möglich ist. Der Fluß dieser Mischungen muß auf die Fließgeschwindigkeit der übrigen Nährstoffe abgestimmt sein.

Düngemittel, die diese Anforderungen erfüllen, sind bisher unbekannt.

- 3 -

Vorstand: Dr. Herbert Asmis · Dr. Christian Bruhn · Hans-Jürgen Hamann
Dr. Heinz Hannse · Karl Otto Mittelstenscheid · Dr. Horst Witzel
Vorsitzender des Aufsichtsrats: Dr. Eduard v. Schwartzkoppen
Sitz der Gesellschaft: Berlin und Bergkamen
Handelsregister: AG Charlottenburg 93 HRB 263 u. AG Kamen HRB 0061

Postanschrift: SCHERING AG · D-1 Berlin 65 · Postfach 65 03 11
Postscheck-Konto: Berlin-West 1175-101, Bankleitzahl 100 100 10
Berliner Commerzbank AG, Berlin, Konto-Nr. 108 7006 00, Bankleitzahl 100 400 00
Berliner Disconto-Bank AG, Berlin, Konto-Nr. 241/5008, Bankleitzahl 100 700 00
Berliner Handels-Gesellschaft — Frankfurter Bank —, Berlin,
Konto-Nr. 14-362, Bankleitzahl 100 202 00

Aufgabe der vorliegenden Erfindung ist daher die Schaffung eines Düngemittels, das alle steuerbaren essentiellen Pflanzennährstoffe bedarfsgerecht unterschiedlich schnell an die Pflanzen abgibt, wobei jeder dieser Nährstoffe allein in Abgabegeschwindigkeit und Abgabeverteilung unterschiedlich und getrennt von allen anderen steuerbar und der gesamte Nährstoffvorrat am Ende der Kulturperiode verbraucht ist.

Die Aufgabe wird erfindungsgemäß durch ein Düngemittel gelöst, das dadurch gekennzeichnet ist, daß dieses alle für die Ernährung von Pflanzen erforderlichen Nährstoffe einer Kulturperiode in partiell oder vollständig umhüllter Form enthält.

Besondere Ausführungsformen dieses Düngemittels bestehen darin, daß dieses als Nährstoffe, Kohlenstoff, Sauerstoff, Wasserstoff, Stickstoff Phosphor, Kalium, Magnesium, Calcium, Schwefel, Eisen, Mangan, Kupfer, Zink, Chlor, Bor, Molybdän, Natrium, Silicium, Kobalt und/oder Aluminium, zweckmäßigerweise in Form ihrer Verbindungen, enthält,
daß

die Nährstoffe mit wasserabweisenden Mitteln aus der Gruppe der Paraffine, der Wachse, der Metallseifen, der quartären Ammonium-Verbindunge, der Harnstoffderivate, der fettsäuremodifizierten Harze, der Silicone und/oder der perfluorierten organischen Verbindungen umhüllt sind,
daß

es sich bei dem wasserabweisenden Mittel um Eisenpalmitat handelt,
daß

die Nährstoffe mit wasserschwerlöslichen oder in Wasser quellenden Mittel aus der Gruppe der Polymere mit wasserbenetzenden Gruppen umhüllt sind,

- 4 -

Vorstand: Dr. Herbert Asmis · Dr. Christian Bruhn · Hans-Jürgen Hamann
Dr. Heinz Hannse · Karl Otto Mittelstenscheid · Dr. Horst Witzel
Vorsitzender des Aufsichtsrats: Dr. Eduard v. Schwartzkoppen
Sitz der Gesellschaft: Berlin und Bergkamen
Handelsregister: AG Charlottenburg 93 HRB 283 u. AG Kamen HRB 0061

Postanschrift: SCHERING AG · D-1 Berlin 65 · Postfach 65 03 11
Postscheck-Konto: Berlin-West 1175-101, Bankleitzahl 100 100 10
Berliner Commerzbank AG, Berlin, Konto-Nr. 108 7006 00, Bankleitzahl 100 400 00
Berliner Disconto-Bank AG, Berlin, Konto-Nr. 241/5008, Bankleitzahl 100 700 00
Berliner Handels-Gesellschaft – Frankfurter Bank –, Berlin,
Konto-Nr. 14-362, Bankleitzahl 100 202 00

S4 FH IV 35718

Formular-Nr.: 1439-2

SCHERING AG
Gewerblicher Rechtsschutz

daß

es sich bei den wasserschwerlöslichen oder in Wasser quellenden Mitteln um Polymere mit wasserbenetzenden Gruppen handelt,

daß es sich bei den wasserbenetzenden Gruppen um Hydroxyl-, Carboxyl-, Alkylester-, Cyan-, Chlor- oder Fluorgruppen handelt,

daß es sich bei den wasserschwerlöslichen oder wasserquellenden Mitteln um Polyvinylalkohole, vorzugsweise mit einem Restacetylgehalt von 10 % handelt,

daß die Nährstoffe mit wasserschwerlöslichen Mitteln aus der Gruppe der anorganischen Verbindungen umhüllt sind,

daß

es sich bei der wasserschwerlöslichen Verbindung um Eisenphosphat oder Calciumphosphat handelt,

daß

die Nährstoffe mit wasserschwerlöslichen oder in Wasser quellenden Mitteln aus der Gruppe der Polymere mit wasserbenetzenden Gruppen oder aus der Gruppe der anorganischen Verbindungen und mit wasserabweisenden Mitteln aus der Gruppe der Paraffine, der Wachse, der Metallseifen, der quartären Ammoniu-Verbindungen, der Harnstoffderivate, der fettsäuremodifizierten Harze, der Silicone und/oder perfluorierten organischen Verbindungen umhüllt sind,

daß

das wasserabweisende Mittel die Nährstoffe in einer Schichtdicke von $10^{-8}$m bis $10^{-2}$m, vorzugsweise von

$1 \cdot 10^{-5}$m bis $2 \cdot 10^{-3}$m umhüllt und daß

das wasserschwerlösliche oder in Wasser quellende Mittel die Nährstoffe in einer Schichtdicke von $10^{-6}$m bis $10^{-2}$m, vorzugsweise von $5 \cdot 10^{-5}$m bis $2 \cdot 10^{-3}$m umhüllt.

- 5 -

Formular-Nr.: 1489-2

Vorstand: Dr. Herbert Asmis · Dr. Christian Bruhn · Hans-Jürgen Hamann
Dr. Heinz Hannse · Karl Otto Mittelstenscheid · Dr. Horst Witzel
Vorsitzender des Aufsichtsrats: Dr. Eduard v. Schwartzkoppen
Sitz der Gesellschaft: Berlin und Bergkamen
Handelsregister: AG Charlottenburg 93 HRB 283 u. AG Kamen HRB 0061

Postanschrift: SCHERING AG · D-1 Berlin 65 · Postfach 65 03 11
Postscheck-Konto: Berlin-West 1175-101, Bankleitzahl 100 100 10
Berliner Commerzbank AG, Berlin, Konto-Nr. 108 7006 00, Bankleitzahl 100 400 00
Berliner Disconto-Bank AG, Berlin, Konto-Nr. 241/5008, Bankleitzahl 100 700 00
Berliner Handels-Gesellschaft — Frankfurter Bank —, Berlin,
Konto-Nr. 14-362, Bankleitzahl 100 202 00

54 FH IV 35718

Zum Gegenstand der Erfindung gehört weiterhin ein Verfahren zur programmierten langfristigen Abgabe von Nährstoffen für Pflanzen in Böden durch Einbringen von Düngemitteln in die Böden, das dadurch gekennzeichnet ist, daß die oben gekennzeichneten Düngemittel verwendet werden, wobei der Nährstofffluß in Abhängigkeit von der jeweiligen Entwicklung und/oder dem Bedarf der Pflanzen erfolgt.

Zum Gegenstand der Erfindung gehört außerdem ein Verfahren zur programmierten langfristigen Abgabe von Nährstoffen für Pflanzen in Substraten durch Einbringen der gekennzeichneten Düngemittel in die Substrate, daß dadurch gekennzeichnet ist, daß der Nährstofffluß gezielt erst nach Bewässern der Substrat-Düngermischungen einsetzt.

Besondere Ausführungsformen dieses Verfahrens stellen dar,
daß der Nährstofffluß gezielt erst nach Bewässern der Substrat-Düngermischungen einsetzt,
daß eine einmalige Düngemittelapplikation zu Beginn zu Beginn des Pflanzenwachstums ausreichend ist für den jeweiligen Bedarf der Pflanze einer Kulturperiode,
daß die Steuerung dem Nährstoffbedarf und/oder der Entwicklung der Pflanzen so angepaßt ist, daß eine Überdüngung und/oder unzulässige Auswaschungsverluste, vermieden werden,
daß die Düngemittel einzeln oder in Mischungen verwandt werden.

Vorstand: Dr. Herbert Asmis · Dr. Christian Bruhn · Hans-Jürgen Hamann
Dr. Heinz Hannse · Karl Otto Mittelstenscheid · Dr. Horst Witzel
Vorsitzender des Aufsichtsrats: Dr. Eduard v. Schwartzkoppen
Sitz der Gesellschaft: Berlin und Bergkamen

Postanschrift: SCHERING AG · D-1000 Berlin 65 · Postfach 65 03 11
Postscheck-Konto: Berlin-West 1175-101, Bankleitzahl 100 100 10
Berliner Commerzbank AG, Berlin, Konto-Nr. 108 7006 00, Bankleitzahl 100 400 00
Berliner Disconto-Bank AG, Berlin, Konto-Nr. 241/5008, Bankleitzahl 100 700 00

Das erfindungsgemäße Düngemittel ist überraschenderweise in der Lage, zu jeder Zeit des Kulturwachstums jeden gewünschten Nährstoff in der jeweils notwendigen Konzentration der Pflanze anzubieten.

Das erfindungsgemäße Düngemittel hat daher den besonderen Vorteil, bei einmaliger Applikation, die sogenannte Startgabe, Dauergabe und Termingabe in einem programmierten Ablauf zu gewährleisten.

Unter Startgabe wird hierbei die Applikation eines Nährstoff- oder Nährstoffgemisches verstanden, das ohne weitere Behandlung die Anfangsentwicklung der Pflanze gewährleistet bezüglich des richtigen Angebotes von Art und Menge aller benötigten Nährstoffe und dies unter Beachtung (Ausnutzung) der Salzverträglichkeit der jeweiligen Kultur.

Dauergabe bedeutet die Applikation eines vorbehandelten Nährstoff- oder Nährstoffgemisches, das die Nährstoffe von Beginn der Applikation an der Pflanze gleichmäßig zur Verfügung stellt.

Bei einer Termingabe wird ein entsprechend vorbehandeltes Nährstoff- oder Nährstoffgemisch ausgebracht, das der Pflanze erst zu einem bestimmten späteren Zeitpunkt zur Verfügung steht.

Mit dieser programmierten Nährstoffabgabe verbinden sich viele Vorteile, die durch Verwendung der bekannten Düngemittel nicht erreicht werden können.

So kann die Düngung beispielsweise bedarfsbezogen durchgeführt werden, indem die Nährstoffabgabe auf den Spitzen- und den Null-

Formular-Nr.: 1489-2

Vorstand: Dr. Herbert Asmis · Dr. Christian Bruhn · Hans-Jürgen Hamann
Dr. Heinz Hannse · Karl Otto Mittelstenscheid · Dr. Horst Witzel
Vorsitzender des Aufsichtsrats: Dr. Eduard v. Schwartzkoppen
Sitz der Gesellschaft: Berlin und Bergkamen
Handelsregister: AG Charlottenburg 93 HRB 283 u. AG Kamen HRB 0061

Postanschrift: SCHERING AG · D-1 Berlin 65 · Postfach 65 03 11
Postscheck-Konto: Berlin-West 1175-101, Bankleitzahl 100 100 10
Berliner Commerzbank AG, Berlin, Konto-Nr. 108 7006 00, Bankleitzahl 100 400 00
Berliner Disconto-Bank AG, Berlin, Konto-Nr. 241/5008, Bankleitzahl 100 700 00
Berliner Handels-Gesellschaft — Frankfurter Bank —, Berlin,
Konto-Nr. 14-362, Bankleitzahl 100 202 00

54 FH IV 35716

bedarf der Pflanzen eingestellt wird, was mit keinem der bekannten Dünger möglich ist.

Hierdurch läßt sich dem unterschiedlichen Nährstoffbedarf der Pflanzen während einer Kulturperiode jeweils optimal genügen, wodurch Schädigungen der Pflanzen durch Überdüngung in Zeiten großer Pflanzenempfindlichkeit oder ungenügendes Wachstum durch Anlieferung unzureichender Nährstoffmengen in Zeiten des Höchstbedarfs vorteilhafterweise vermieden werden.

Die mittels des erfindungsgemäßen Düngemittels steuerbare Freisetzung des Nährstoffangebotes hat weiterhin den Vorteil, das Ertragspotential der Pflanzen auch unter klimatisch ungünstigen Bedingungen oder auf Böden mit geringer Fruchtbarkeit voll auszuschöpfen.

Des weiteren eröffnet die mittels des erfindungsgemäßen Düngemittels steuerbare Freisetzung des Nährstofflusses die Möglichkeit, den wechselnden Ansprüchen bezüglich der Nährstofformen und deren Konzentrationen einer speziellen Kultur durch eine bei der Aussaat oder Topfung einmalig zugegebenen Gesamtdüngermenge optimal zu genügen, womit das risikoreiche, aufwendige und bei falscher Terminierung uneffektive Nachdüngen entfällt.

Die mittels des erfindungsgemäßen Düngemittels steuerbare Freisetzung der Nährstoffe eröffnet weiterhin die Möglichkeit, Substrate lange vor deren Nutzung mit Düngemitteln zu versetzen, ohne bei beginnender Nutzung mit hohen, bereits aktiven Salzgehalten rechnen zu müssen, da diese erst bei Nutzungsbeginn durch Bewässern der Substrate aktiviert werden, wodurch sich Salzschocks beziehungsweise Salzschäden vermeiden lassen.

Vorstand: Dr. Herbert Asmis · Dr. Christian Bruhn · Hans-Jürgen Hamann
Dr. Heinz Hannse · Karl Otto Mittelstenscheid · Dr. Horst Witzel
Vorsitzender des Aufsichtsrats: Dr. Eduard v. Schwartzkoppen
Sitz der Gesellschaft: Berlin und Bergkamen
Handelsregister: AG Charlottenburg 93 HRB 283 u. AG Kamen HRB 0061

Postanschrift: SCHERING AG · D-1 Berlin 65 · Postfach 65 03 11
Postscheck-Konto: Berlin-West 1175-101, Bankleitzahl 100 100 10
Berliner Commerzbank AG, Berlin, Konto-Nr. 108 7006 00, Bankleitzahl 100 400 00
Berliner Disconto-Bank AG, Berlin, Konto-Nr. 241/5008, Bankleitzahl 100 700 00
Berliner Handels-Gesellschaft – Frankfurter Bank –, Berlin,
Konto-Nr. 14-362, Bankleitzahl 100 202 00

Formular-Nr.: 1489-2

S4 FH IV 35718

Als Düngemittel im Sinne der Erfindung verwendbar sind:

- Düngerpulver
- Kristalline Dünger
- Granulierte Dünger
- Granulierte beschichtete Dünger
- Düngerstäbchen
- Enkapsulierte Düngerlösungen beziehungsweise Düngersuspensionen

Die genannten Dünger können vorliegen als:

- Mineralische Einnährstoffdünger
- Mineralische Mehrnährstoffdünger
- Organisch-mineralische Dünger
- Organische Dünger
- Spurennährstoffe
- Kombination der vorgenannten Komponenten

Einbezogen sind Düngemittel jedweder Vorbehandlung, wie zum Beispiel Düngemittel mit verlangsamter Freigabe der Pflanzennährstoffe, von denen schwerlösliche Salze, polymere Nährstoffverbindungen und an natürliche und synthetische Träger chemisch oder physikalisch gebundene Nährstoffe beispielhaft zu nennen sind.

Die Herstellung des erfindungsgemäßen Düngemittels erfolgt in an sich bekannter Weise, zum Beispiel, indem man das in seiner Nährstoffreisetzung erfindungsgemäß zu beeinflussende Düngemittel in einem für die jeweilige Art der Behandlung geeigneten Aggregat, wie zum Beispiel einer Drehtrommel oder einem Granulierteller oder einem Wirbelschichtgerät vorlegt

Formular-Nr.: 1438-2

Vorstand: Dr. Herbert Asmis · Dr. Christian Bruhn · Hans-Jürgen Hamann
Dr. Heinz Hannse · Karl Otto Mittelsienscheid · Dr. Horst Witzel
Vorsitzender des Aufsichtsrats: Dr. Eduard v. Schwartzkoppen
Sitz der Gesellschaft: Berlin und Bergkamen
Handelsregister: AG Charlottenburg 93 HRB 283 u. AG Kamen HRB 0061

Postanschrift: SCHERING AG · D-1 Berlin 65 · Postfach 65 03 11
Postscheck-Konto: Berlin-West 1175-101, Bankleitzahl 100 100 10
Berliner Commerzbank AG, Berlin, Konto-Nr. 108 7006 00, Bankleitzahl 100 400 00
Berliner Disconto-Bank AG, Berlin, Konto-Nr. 241/5008, Bankleitzahl 100 700 00
Berliner Handels-Gesellschaft — Frankfurter Bank —, Berlin,
Konto-Nr. 14-362, Bankleitzahl 100 202 00

und mit dem Behandlungsmittel derart versetzt, daß das Düngemittel vollständig und ausreichend gleichmäßig bis zur gewünschten Schichtdicke umhüllt wird oder das Behandlungsmittel in einem geeigneten Aggregat, wie zum Beispiel einer Drehtrommel oder einem Granulierteller, vorlegt und das in seiner Nährstofffreisetzung erfindungsgemäß zu beeinflussende Düngemittel derart einträgt, daß das Düngemittel vollständig und ausreichend gleichmäßig mit der gewünschten Schichtdicke umhüllt wird.

Als wasserabweisende und/oder wasserschwerlösliche oder wasserquellende Mittel lassen sich im einzelnen verwenden:

Paraffine, zweckmäßigerweise mit einem Schmelzbereich von 40 bis 250° C, vorzugsweise Hartparaffin mit einem Schmelzbereich oberhalb von 55° C;

Wachse, wie zum Beispiel Bienenwachs, Walrat, Carnaubawachs;

Metallseifen, wie zum Beispiel Mg-, Ca-, Fe-, Cu-, Zn-, Mn-, Zr- oder Al-Salze der Laurinsäure, Myristinsäure, Palmitinsäure, Stearinsäure oder Ölsäure, vorzugsweise Mg-, Ca-, Fe-, Al- oder Zr-Salze der Palmitinsäure;

quartäre Ammoniumverbindungen, wie zum Beispiel Octadecyloxymethylpyridiniumchlorid oder N-Methyl-N-stearoylamidomethylenpyridiniumchlorid;

fettmodifizierte Kunstharze; wie zum Beispiel Kondensate aus Monododecylharnstoff-Formaldehyd-Vorkonzentrat oder Hexamethylolmelaminäther modifiziert mit Laurinsäure, Palmitinsäure und/oder Stearinsäure;

Formular-Nr.: 1489-2

Vorstand: Dr. Herbert Asmis · Dr. Christian Bruhn · Hans-Jürgen Hamann
Dr. Heinz Hannse · Karl Otto Mittelstenscheid · Dr. Horst Witzel
Vorsitzender des Aufsichtsrats: Dr. Eduard v. Schwartzkoppen
Sitz der Gesellschaft: Berlin und Bergkamen
Handelsregister: AG Charlottenburg 93 HRB 283 u. AG Kamen HRB 0061

Postanschrift: SCHERING AG · D-1 Berlin 65 · Postfach 65 03 11
Postscheck-Konto: Berlin-West 1175-101, Bankleitzahl 100 100 10
Berliner Commerzbank AG, Berlin, Konto-Nr. 108 7006 00, Bankleitzahl 100 400 00
Berliner Disconto-Bank AG, Berlin, Konto-Nr. 241/5008, Bankleitzahl 100 700 00
Berliner Handels-Gesellschaft – Frankfurter Bank –, Berlin,
Konto-Nr. 14-362, Bankleitzahl 100 202 00

S4 FH IV 35718

Harnstoffderivate, wie zum Beispiel Octadecyläthylenharnstoff;

Melaminderivate;

Polysiloxane, wie zum Beispiel Hydrogenmethylpolysiloxan und Dimethylpolysiloxan;

Fluorcarbonpolymerisate, wie zum Beispiel 1,1-Dihydroperfluoroctylpolyacrylsäureester;

Alginate, wie zum Beispiel Kaliumalginat;

Gelatine;

Casein;

Polysaccharide, wie zum Beispiel Stärke,
Cellulose, Cellulosederivate, wie zum Beispiel Äthylcellulose,
Hydroxypropylcellulose und deren Gemische, Pektine, Xanthane;

Polyvinylalkohole;
Polyvinylacetate;
Polyvinyläther;
Polyvinylpyrollidone;
Polyacrylate;

Tonmineralien, wie zum Beispiel Bentonit, Illit, Attapulgit;
Metalloxide, wie zum Beispiel Eisenoxidhydrat, Magnesiumoxid;
Metallphosphate, wie zum Beispiel Calciumphosphat, Eisenphosphat;
Polyphosphate, wie zum Beispiel Kurrolsches Salz;
Metallsilikate, wie zum Beispiel Kaliwasserglas;

Formular-Nr.: 1489-2

Vorstand: Dr. Herbert Asmis · Dr. Christian Bruhn · Hans-Jürgen Hamann
Dr. Heinz Hannse · Karl Otto Mittelstenscheid · Dr. Horst Witzel
Vorsitzender des Aufsichtsrats: Dr. Eduard v. Schwartzkoppen
Sitz der Gesellschaft: Berlin und Bergkamen
Handelsregister: AG Charlottenburg 93 HRB 263 u. AG Kamen HRB 0061

Postanschrift: SCHERING AG · D-1 Berlin 65 · Postfach 65 03 11
Postscheck-Konto: Berlin-West 1175-101, Bankleitzahl 100 100 10
Berliner Commerzbank AG, Berlin, Konto-Nr. 108 7006 00, Bankleitzahl 100 400 00
Berliner Disconto-Bank AG, Berlin, Konto-Nr. 241/5008, Bankleitzahl 100 700 00
Berliner Handels-Gesellschaft – Frankfurter Bank –, Berlin,
Konto-Nr. 14-362, Bankleitzahl 100 202 00

S4 FH IV 35718

vorzugsweise teilverseifte Polyvinylacetate, Gelatine, Eisenoxidhydrate, Calciumphosphat.

Die Auftragung der Schichten erfolgt in Schichten von $10^{-8}$m bis $10^{-2}$m, insbesondere von $1 \cdot 10^{-6}$m bis $2 \cdot 10^{-3}$m.

Die Behandlungsmittel werden aufgebracht als Einzelkomponenten selbst, in Lösung oder als Emulsion und ebenfalls als Mehrkomponentensystem kombiniert.

Das erfindungsgemäße Düngemittel wird vorteilhafterweise in der Form eines Mischgranulates angewandt.

Als Granulatform können Aufbaugranulate, Preßgranulate (Splitter, Pellets), natürliche Kristalle usw. verwendet werden.

Als chemische Bestandteile kommen wie oben erwähnt alle chemischen Verbindungen mit Düngerwirkung in Frage. Insbesondere gehören dazu alle bekannten N-P-K- und spurenelementhaltigen anorganischen Salze, Metallchelate, Spurenelemente in sonstiger organischer Bindung, Harnstoff-Aldehydkondensate, Harnstoffphosphat, Kohlenhydrate, Eiweiße, Peptide und Aminosäure.

Hinsichtlich der Flußeigenschaften kann vorteilhafterweise folgende Einteilung vorgenommen werden:

1. Verbindungen mit guter Lösungsgeschwindigkeit in Wasser.

2. Verbindungen, die wegen ihrer chemischen Beschaffenheit eine mehr oder weniger gute Lösungsgeschwindigkeit besitzen, wie zum Beispiel Calcium-Magnesium-Phosphate, -silikate -karbonate und Harnstoff-Aldehyd-Kondensate.

Formular-Nr.: 1439-2

Vorstand: Dr. Herbert Asmis · Dr. Christian Bruhn · Hans-Jürgen Hamann
Dr. Heinz Hannse · Karl Otto Mittelstenscheid · Dr. Horst Witzel
Vorsitzender des Aufsichtsrats: Dr. Eduard v. Schwartzkoppen
Sitz der Gesellschaft: Berlin und Bergkamen
Handelsregister: AG Charlottenburg 93 HRB 283 u. AG Kamen HRB 0061

Postanschrift: SCHERING AG · D-1 Berlin 65 · Postfach 65 03 11
Postscheck-Konto: Berlin-West 1175-101, Bankleitzahl 100 100 10
Berliner Commerzbank AG, Berlin, Konto-Nr. 108 7006 00, Bankleitzahl 100 400 00
Berliner Disconto-Bank AG, Berlin, Konto-Nr. 241/5008, Bankleitzahl 100 700 00
Berliner Handels-Gesellschaft — Frankfurter Bank —, Berlin,
Konto-Nr. 14-362, Bankleitzahl 100 202 00

S4 FH IV 35718

3. Verbindungen, deren Löslichkeitseigenschaften durch physikalische Behandlung beeinflußt werden können, wie zum Beispiel durch

Imprägnieren

Einbetten in Kunstharzmatrix und

Umhüllen mit Kunstharzen.

Die genannten physikalischen Verfahren können auf die Granulate der einzelnen Verbindungen wie auch auf deren Gemische angewendet werden. Unter Anwendung dieser Behandlungsmöglichkeiten ist es möglich, daß für jedes in der Pflanzenernährung relevante Nährelement Zeitpunkt des Wirkungsbeginns und darauf folgende Wirkungsdauer gezielt festgelegt werden.

Die so vorbehandelten Grundgranulate werden schließlich zu einem Endgemisch zusammengefaßt, dessen düngende Wirkung genau auf die spezifischen Bedürfnisse einer speziellen Kultur beziehungsweise einer Kulturgruppe eingestellt werden kann. Damit kann erfindungsgemäß erstmals ein "Volldünger" so programmiert werden, daß er zu unterschiedlichen Entwicklungsstadien den dann unterschiedlichen Ernährungsansprüchen ganz gezielt gerecht werden kann.

Die folgenden Beispiele dienen zur Erläuterung der Erfindung:

Vorstand: Dr. Herbert Asmis · Dr. Christian Bruhn · Hans-Jürgen Hamann
Dr. Heinz Hannse · Karl Otto Mittelstenscheid · Dr. Horst Witzel
Vorsitzender des Aufsichtsrats: Dr. Eduard v. Schwartzkoppen
Sitz der Gesellschaft: Berlin und Bergkamen
Handelsregister: AG Charlottenburg 93 HRB 283 u. AG Kamen HRB 0061

Postanschrift: SCHERING AG · D-1 Berlin 65 · Postfach 65 03 11
Postscheck-Konto: Berlin-West 1175-101, Bankleitzahl 100 100 10
Berliner Commerzbank AG, Berlin, Konto-Nr. 108 7006 00, Bankleitzahl 100 400 00
Berliner Disconto-Bank AG, Berlin, Konto-Nr. 241/5006, Bankleitzahl 100 700 00
Berliner Handels-Gesellschaft — Frankfurter Bank —, Berlin,
Konto-Nr. 14-362, Bankleitzahl 100 202 00

Formular-Nr.: 1488-2

54 FH IV 3578

**B e i s p i e l  1:**  Herstellung der Startgabe

Die Bestandteile (zum Beispiel Rez* 1, Rez* 2, Rez* 3, Rez* 4) der herzustellenden Düngemittelstartgabe werden in feinkristalliner bis pulvriger Form (Korngröße max. 1 mm) homogen miteinander vermischt. Diese Mischung wird zwischen Walzenpressen zu Schülpen verdichtet. Die Schülpen werden zerkleinert und fraktioniert. Die Startgabe resultiert als Gutkornfraktion mit einer Körnung zwischen 1,5 und 4 mm.

Tabelle 1: Beispielhafte Zusammensetzungen von Düngemittelstartgaben mit Phosphatbetonung und Variation der Stickstofformen sowie einer Stickstoffbetonung.

| Bestandteile  % | Rez* 1 | Rez* 2 | Rez* 3 | Rez* 4 |
|---|---|---|---|---|
| Ammoniumnitrat | - | 6,1 | 9,5 | - |
| Harnstoffkondensat | - | - | - | 36,9 |
| Harnstoff | 5,0 | - | - | 3,3 |
| Monoammoniumphosphat | 38,0 | 38,0 | 20,5 | - |
| Diammoniumphosphat | 9,2 | 9,2 | 23,1 | 9,0 |
| Kaliumnitrat | 10,0 | 10,0 | 13,0 | 12,0 |
| Kaliumsulfat | 10,8 | 9,8 | 13,0 | 13,5 |
| Magnesiumphosphat | 21,3 | 21,3 | - | 17,7 |
| Magnesiumsulfat | 1,0 | 1,0 | 17,1 | 3,0 |
| Spurenelemente | 3,2 | 3,2 | 3,8 | 3,8 |
| Hilfsstoffe | 1,5 | 1,4 | - | 0,8 |

Verhältnis
$N-P_2O_5-K_2O-MgO$

10-34-10-8          12-25-12-5
  10-34-9-8     19-10-12-7

* Rez. = Rezeptur

Formular-Nr.: 1489-8

Vorstand: Dr. Herbert Asmis · Dr. Christian Bruhn · Hans-Jürgen Hamann
Dr. Heinz Hannse · Karl Otto Mittelstenscheid · Dr. Horst Witzel
Vorsitzender des Aufsichtsrats: Dr. Eduard v. Schwartzkoppen
Sitz der Gesellschaft: Berlin und Bergkamen
Handelsregister: AG Charlottenburg 93 HRB 283 u. AG Kamen HRB 0061

Postanschrift: SCHERING AG · D-1000 Berlin 65 · Postfach 65 03 11
Postscheck-Konto: Berlin-West 1175-101, Bankleitzahl 100 100 10
Berliner Commerzbank AG, Berlin, Konto-Nr. 108 7006 00, Bankleitzahl 100 400 00
Berliner Disconto-Bank AG, Berlin, Konto-Nr. 241/5008, Bankleitzahl 100 700 00
Berliner Handels-Gesellschaft — Frankfurter Bank —, Berlin,
Konto-Nr. 14-362, Bankleitzahl 100 202 00

SC3 GC IV 42550

Beispiel 2: Herstellung der Dauergabe

Die Bestandteile (zum Beispiel Rez* 5, Rez* 6, Rez* 7, Rez* 8, Rez* 9, Rez* 10) der herzustellenden Düngemitteldauergabe werden wie in Beispiel 1 beschrieben oder auf andere Weise stückig gemacht. Die Gutkornfraktion wird in einem Wirbelschichtgerät mit einer in Testbezin gelösten Lackmischung auf Basis trocknender Öle so lange versetzt, bis daß die Lösungsgeschwindigkeit der Nährstoffe auf das gewünschte Maß reduziert ist.

Tabelle 2: Beispielhafte Zusammensetzung von Düngemitteldauergaben: Stickstoff-Phosphat-Kalium ausgeglichen mit Magnesium, Stickstoff-Kalium ausgeglichen, Stickstoffbetont, Kalium-betont, Stickstoff-Kalium ausgeglichen mit Phosphat, Stickstoff-Kalium ausgeglichen mit Magnesium.

| Bestandteile % | Rez*5 | Rez*6 | Rez*7 | Rez*8 | Rez*9 | Rez*10 |
|---|---|---|---|---|---|---|
| Ammoniumnitrat | 34,0 | 45,0 | 79,3 | 10,0 | 45,0 | - |
| Ammoniumsulfat | - | 7,8 | - | 17,2 | - | - |
| Harnstoff | - | - | - | - | - | 44,4 |
| Diammonium-phosphat | 26,0 | - | - | - | 10,0 | - |
| Kaliumnitrat | - | 35,0 | 20,7 | 22,8 | 26,5 | 32,6 |
| Kaliumsulfat | 34,0 | 12,2 | - | 50,0 | 18,5 | 10,5 |
| Magnesiumsulfat | 6,0 | - | - | - | - | 12,5 |
| Verhältnis $N-P_2O_5-K_2O-MgO$ | 17-14-17-2 | 22-0-22 | 30-0-9 | 10-0-35 | 21-5-21 | 25-0-20-4 |

* Rez. = Rezeptur

Formular-Nr.: 1489-8

Vorstand: Dr. Herbert Asmis · Dr. Christian Bruhn · Hans-Jürgen Hamann
Dr. Heinz Hannse · Karl Otto Mittelstenscheid · Dr. Horst Witzel
Vorsitzender des Aufsichtsrats: Dr. Eduard v. Schwartzkoppen
Sitz der Gesellschaft: Berlin und Bergkamen
Handelsregister: AG Charlottenburg 93 HRB 283 u. AG Kamen HRB 0061

Postanschrift: SCHERING AG · D-1000 Berlin 65 · Postfach 65 03 11
Postscheck-Konto: Berlin-West 1175-101, Bankleitzahl 100 100 10
Berliner Commerzbank AG, Berlin, Konto-Nr. 108 7006 09, Bankleitzahl 100 400 00
Berliner Disconto-Bank AG, Berlin, Konto-Nr. 241/5008, Bankleitzahl 100 700 00
Berliner Handels-Gesellschaft – Frankfurter Bank –, Berlin,
Konto-Nr. 14-362, Bankleitzahl 100 202 00

SC3 GC IV 42550

B e i s p i e l  3: Herstellung der Termingabe

Die Bestandteile (zum Beispiel Rez* 11, Rez* 12, Rez* 13, Rez* 14, Rez* 15) der herzustellenden Düngemitteltermingabe werden wie in den Beispielen 1 und 2 beschrieben oder auf andere Weise mit einer Grundbeschichtung versehen. Die so vorbehandelten Granulate werden in einem Wirbelschichtgerät oder einer Drehtrommel mit einer wäßrigen Dragierlösung oder -suspension versetzt, deren Hauptbestandteile wasserlösliche und/oder wasserquellende Stoffe sind, wie zum Beispiel Polyvinylalkohole, Polyvinylpyrrolidon, Celluloseäther, Gelatine, Polysaccharide, Alginate usw. Abschließend wird die Beschichtung mit einem hydrophobierenden Finish versehen wie zum Beispiel Paraffine, Wachse, Calcium- und Eisenseifen, fettmodifizierte Harnstoff-Formaldehydkondensate, Siloxane usw. Art und Menge der Beschichtung wird bestimmt durch den Zeitpunkt, zu dem die gleichmäßige Freisetzung der Nährstoffe gefordert ist.

Tabelle 3: Beispielhafte Zusammensetzung von Düngemitteltermingaben:
Stickstoff-Phosphat-Kalium ausgeglichen mit Magnesium,
Stickstoff-betont mit Phosphat und Kalium,
Stickstoff-Kalium ausgeglichen,
Stickstoff-betont mit Kalium und Magnesium,
Kalium-betont.

*Rez. = Rezeptur

Vorstand: Dr. Herbert Asmis · Dr. Christian Bruhn · Hans-Jürgen Hamann
Dr. Heinz Hannse · Karl Otto Mittelstenscheid · Dr. Horst Witzel
Vorsitzender des Aufsichtsrats: Dr. Eduard v. Schwartzkoppen
Sitz der Gesellschaft: Berlin und Bergkamen
Handelsregister: AG Charlottenburg 93 HRB 283 u. AG Kamen HRB 0061

Postanschrift: SCHERING AG · D-1000 Berlin 65 · Postfach 65 03 11
Postscheck-Konto: Berlin-West 1175-101, Bankleitzahl 100 100 10
Berliner Commerzbank AG, Berlin, Konto-Nr. 108 7006 00, Bankleitzahl 100 400 00
Berliner Disconto-Bank AG, Berlin, Konto-Nr. 241/5008, Bankleitzahl 100 700 00
Berliner Handels-Gesellschaft — Frankfurter Bank —, Berlin,
Konto-Nr. 14-362, Bankleitzahl 100 202 00

0128376
SCHERING AG
Gewerblicher Rechtsschutz

| Bestandteile % | Rez* 11 | Rez* 12 | Rez* 13 | Rez* 14 | Rez* 15 |
|---|---|---|---|---|---|
| Ammoniumnitrat | 30,1 | 55,6 | 45,0 | – | 24,7 |
| Ammoniumsulfat | 3,8 | 11,7 | – | – | 4,3 |
| Diammonium-phosphat | 3,2 | 9,0 | – | – | – |
| Monoammonium-phosphat | 17,4 | – | – | – | – |
| Harnstoff | 5,5 | – | – | 65,4 | – |
| Kaliumsulfat | 33,2 | 23,7 | 8,3 | – | 71,0 |
| Kaliumnitrat | – | – | 46,7 | 22,0 | – |
| Magnesiumsulfat | – | – | – | 12,6 | – |
| Magnesiumphosphat | 3,0 | – | – | – | – |
| Magnesiumoxid | 3,8 | – | – | – | – |

| Verhältnis $N-P_2O_5-K_2O-MgO$ | 14-13-16-4 | 23-5-12 | 22-0-25 | 33-0-10-4 | 10-0-35 |
|---|---|---|---|---|---|

* Rez. = Rezeptur

Formular-Nr.: 1489-2

Vorstand: Dr. Herbert Asmis · Dr. Christian Bruhn · Hans-Jürgen Hamann
Dr. Heinz Hannse · Karl Otto Mittelstenscheid · Dr. Horst Witzel
Vorsitzender des Aufsichtsrats: Dr. Eduard v. Schwartzkoppen
Sitz der Gesellschaft: Berlin und Bergkamen
Handelsregister: AG Charlottenburg 93 HRB 283 u. AG Kamen HRB 0061

Postanschrift: SCHERING AG · D-1 Berlin 65 · Postfach 65 03 11
Postscheck-Konto: Berlin-West 1175-101, Bankleitzahl 100 100 10
Berliner Commerzbank AG, Berlin, Konto-Nr. 108 7006 00, Bankleitzahl 100 400 00
Berliner Disconto-Bank AG, Berlin, Konto-Nr. 241/5008, Bankleitzahl 100 700 00
Berliner Handels-Gesellschaft — Frankfurter Bank —, Berlin,
Konto-Nr. 14-362, Bankleitzahl 100 202 00

S4 FH IV 35718

<u>B e i s p i e l   4:</u> Herstellung einer kulturspezifischen Dünger-
mischung

Die gemäß den Beispielen 1, 2 und 3 separat hergestellten Düngemittel werden in einem Behälter - zum Beispiel Nauta-Mischer,
Drehtrommel - derart gemischt, daß eine Verletzung der Granulatoberflächen vermieden wird. Die Mischzeit ist abhängig vom
Mischaggregat und von den Mengenverhältnissen der einzelnen
Komponenten. Die Mischungsverhältnisse der einzelnen Bestandteile sind durch Korrelation von Pflanzenbedarf und Angebotskurve vorzunehmen. Die Variation der Angebotskurve dreier definierter Düngerkomponenten sind in der Tabelle 4 und 5 dargestellt.


Als beispielhafte Mischungskomponente sind ausgewählt:


A. Startgabe: Rez* 4: 19-10-12-7  (2 - 4 mm)

B. Dauergabe: Rez* 9: 21-5-21    (2 - 4 mm)

94 % + 6 % Beschichtung mit Lack auf Basis trocknender Öle aus 50 %iger Testbenzinlösung in der Wirbelschicht,

C. Termingabe: Rez* 15: 10-0-35  (2 - 4 mm) 50 %

+ 4 % Grundbeschichtung, Lack auf Basis
trocknender Öle aus 50 %iger Testbenzinlösung in der Wirbelschicht,

+ 46 % Terminbeschichtung aus

45,5 % Terminhülle aus 50 %iger wäßriger
Dispersion in der Drehtrommel

- bestehend aus

Bindemittel: 3 Teile
(Zucker : PE-Wachs 2 : 1) ;

Quellstoffe: 1,5 Teile
(Celluloseäther: Polyvinylalkohol : Stärke wie 2 : 1 : 3);


*Rez. = Rezeptur

Formular-Nr.: 1489-2

Vorstand: Dr. Herbert Asmis · Dr. Christian Bruhn · Hans-Jürgen Hamann
Dr. Heinz Hannse · Karl Otto Mittelstenscheid · Dr. Horst Witzel
Vorsitzender des Aufsichtsrats: Dr. Eduard v. Schwartzkoppen
Sitz der Gesellschaft: Berlin und Bergkamen
Handelsregister: AG Charlottenburg 93 HRB 283 u. AG Kamen HRB 0061

Postanschrift: SCHERING AG · D-1 Berlin 65 · Postfach 65 03 11
Postscheck-Konto: Berlin-West 1175-101, Bankleitzahl 100 100 10
Berliner Commerzbank AG, Berlin, Konto-Nr. 108 7006 00, Bankleitzahl 100 400 00
Berliner Disconto-Bank AG, Berlin, Konto-Nr. 241/5008, Bankleitzahl 100 700 00
Berliner Handels-Gesellschaft — Frankfurter Bank —, Berlin,
Konto-Nr. 14-362, Bankleitzahl 100 202 00

S4 FH IV 35718

0128376

SCHERING AG
Gewerblicher Rechtsschutz

Hydrophobiermittel: 1 Teil
(Ca-Stearat) und

Füllstoff: 1 Teil
(Kieselsäure)

und 0,5 % Finish, trocken Fe-Palmitat in der Drehtrommel

Vorstand: Dr. Herbert Asmis · Dr. Christian Bruhn · Hans-Jürgen Hamann
Dr. Heinz Hannse · Karl Otto Mittelstenscheid · Dr. Horst Witzel
Vorsitzender des Aufsichtsrats: Dr. Eduard v. Schwartzkoppen
Sitz der Gesellschaft: Berlin und Bergkamen
Handelsregister: AG Charlottenburg 93 HRB 283 u. AG Kamen HRB 0061

Postanschrift: SCHERING AG · D-1 Berlin 65 · Postfach 65 03 11
Postscheck-Konto: Berlin-West 1175-101, Bankleitzahl 100 100 10
Berliner Commerzbank AG, Berlin, Konto-Nr. 108 7006 00, Bankleitzahl 100 400 00
Berliner Disconto-Bank AG, Berlin, Konto-Nr. 241/5008, Bankleitzahl 100 700 00
Berliner Handels-Gesellschaft — Frankfurter Bank —, Berlin,
Konto-Nr. 14-362, Bankleitzahl 100 202 00

S4 FH IV 35716

Formular-Nr.: 1439-2

## Tabelle 4: Variation der Angebotskurve bei 10 % Startgabe und Variation der Düngemittelrestmenge zwischen Dauergabe und Termingabe

Mischungsrelation – Start : Dauer : Termin

| Tage | 1:0:9 % | 1:1:8 % | 1:2:7 % | 1:3:6 % | 1:4:5 % | 1:5:4 % | 1:6:3 % | 1:7:2 % | 1:8:1 % | 1:9:0 % |
|---|---|---|---|---|---|---|---|---|---|---|
| 0 | 0,00 | 0,00 | 0,00 | 0,00 | 0,00 | 0,00 | 0,00 | 0,00 | 0,00 | 0,00 |
| 4 | 8,00 | 9,64 | 11,28 | 12,92 | 14,56 | 16,20 | 17,84 | 19,48 | 21,12 | 22,76 |
| 8 | 2,08 | 4,16 | 6,24 | 8,32 | 10,40 | 12,48 | 14,56 | 16,64 | 18,72 | 20,80 |
| 12 | 1,00 | 2,60 | 4,20 | 5,80 | 7,40 | 9,00 | 10,60 | 12,20 | 13,80 | 15,40 |
| 16 | 1,17 | 2,24 | 3,31 | 4,38 | 5,45 | 6,52 | 7,59 | 8,66 | 9,73 | 10,80 |
| 20 | 1,89 | 2,56 | 3,23 | 3,90 | 4,57 | 5,24 | 5,91 | 6,58 | 7,25 | 7,92 |
| 24 | 3,78 | 3,96 | 4,14 | 4,32 | 4,50 | 4,68 | 4,86 | 5,04 | 5,22 | 5,40 |
| 28 | 5,22 | 5,12 | 5,02 | 4,92 | 4,82 | 4,72 | 4,62 | 4,52 | 4,42 | 4,32 |
| 32 | 7,11 | 6,68 | 6,25 | 5,82 | 5,39 | 4,96 | 4,53 | 4,10 | 3,67 | 3,24 |
| 36 | 9,36 | 8,56 | 7,76 | 6,96 | 6,16 | 5,36 | 4,56 | 3,76 | 2,96 | 2,16 |
| 40 | 11,25 | 10,16 | 9,07 | 7,98 | 6,89 | 5,80 | 4,71 | 3,62 | 2,53 | 1,44 |
| 44 | 12,78 | 11,52 | 10,26 | 9,00 | 7,74 | 6,48 | 5,22 | 3,96 | 2,70 | 1,44 |
| 48 | 11,61 | 10,44 | 9,27 | 8,10 | 6,93 | 5,76 | 4,59 | 3,42 | 2,27 | 1,08 |
| 52 | 9,72 | 8,76 | 7,80 | 6,84 | 5,88 | 4,92 | 3,96 | 3,00 | 2,04 | 1,08 |
| 56 | 6,03 | 5,44 | 4,85 | 4,26 | 3,67 | 3,08 | 2,49 | 1,90 | 1,31 | 0,72 |
| 60 | 4,14 | 3,76 | 3,38 | 3,00 | 2,67 | 2,24 | 1,86 | 1,48 | 1,10 | 0,72 |
| 64 | 2,97 | 2,68 | 2,39 | 2,10 | 1,81 | 1,52 | 1,23 | 0,94 | 0,65 | 0,36 |
| 68 | 1,53 | 1,40 | 1,27 | 1,14 | 1,01 | 0,88 | 0,75 | 0,62 | 0,49 | 0,36 |
| 72 | 0,36 | 0,32 | 0,28 | 0,24 | 0,20 | 0,16 | 0,12 | 0,08 | 0,04 | 0,00 |
| 76 | 0,00 | 0,00 | 0,00 | 0,00 | 0,00 | 0,00 | 0,00 | 0,00 | 0,00 | 0,00 |

Komponenten: Dauergabe mit Abgabe-Maximum bei 10 Tagen, hergestellt entsprechend Beispiel 2
Termingabe mit Abgabe-Maximum bei 44 Tagen, hergestellt entsprechend Beispiel 3

Vorstand: Dr. Herbert Asmis · Dr. Christian Bruhn · Hans-Jürgen Hamann
Dr. Heinz Hamse · Karl Otto Mittelstenscheid · Dr. Horst Witzel
Vorsitzender des Aufsichtsrats: Dr. Eduard v. Schwartzkoppen
Sitz der Gesellschaft: Berlin und Bergkamen
Handelsregister: AG Charlottenburg 93 HRB 283 u. AG Kamen HRB 0061

Postanschrift: SCHERING AG · D-1 Berlin 65 · Postfach 65 0311
Postscheck-Konto: Berlin-West 1175-101, Bankleitzahl 100 100 10
Postscheck-Konto: Berlin-West 1175-101, Bankleitzahl 100 100 10
Berliner Commerzbank AG, Berlin, Konto-Nr. 103 7006 00, Bankleitzahl 100 400
Berliner Disconto-Bank AG, Berlin, Konto-Nr. 241/5008, Bankleitzahl 100 700
Berliner Handels-Gesellschaft – Frankfurter Bank –, Berlin,
Konto-Nr. 14-362, Bankleitzahl 100 202 00

ular-Nr.: 1439-2

## Tabelle 5: Variation der Angebotskurve bei 20 % Startgabe und Variation der Düngemittelrest-menge zwischen Dauergabe und Termingabe

### Mischungsrelation – Start : Dauer : Termin

| Tage | 2:0:8 % | 2:1:7 % | 2:2:6 % | 2:3:5 % | 2:4:4 % | 2:5:3 % | 2:6:2 % | 2:7:1 % | 2:8:0 % |
|---|---|---|---|---|---|---|---|---|---|
| 0 | 0,00 | 0,00 | 0,00 | 0,00 | 0,00 | 0,00 | 0,00 | 0,00 | 0,00 |
| 4 | 16,00 | 17,64 | 19,28 | 20,92 | 22,56 | 24,20 | 25,84 | 27,48 | 29,12 |
| 8 | 3,76 | 5,84 | 7,92 | 10,00 | 12,08 | 14,16 | 16,24 | 18,32 | 20,40 |
| 12 | 1,20 | 2,80 | 4,40 | 6,00 | 7,60 | 9,20 | 10,80 | 12,40 | 14,00 |
| 16 | 1,04 | 2,11 | 3,18 | 4,25 | 5,32 | 6,39 | 7,46 | 8,53 | 9,60 |
| 20 | 1,68 | 2,35 | 3,02 | 3,69 | 4,36 | 5,03 | 5,70 | 6,37 | 7,04 |
| 24 | 3,36 | 3,54 | 3,72 | 3,90 | 4,08 | 4,26 | 4,44 | 4,62 | 4,80 |
| 28 | 4,64 | 4,54 | 4,46 | 4,34 | 4,24 | 4,14 | 4,04 | 3,94 | 3,84 |
| 32 | 6,32 | 5,89 | 5,46 | 5,03 | 4,60 | 4,17 | 3,74 | 3,31 | 2,88 |
| 36 | 8,32 | 7,52 | 6,72 | 5,92 | 5,12 | 4,32 | 3,52 | 2,72 | 1,92 |
| 40 | 10,00 | 8,91 | 7,82 | 6,73 | 5,64 | 4,55 | 3,46 | 2,37 | 1,28 |
| 44 | 11,36 | 10,10 | 8,84 | 7,58 | 6,32 | 5,06 | 3,80 | 2,54 | 1,28 |
| 48 | 10,32 | 9,15 | 7,98 | 6,81 | 5,64 | 4,47 | 3,30 | 2,13 | 0,96 |
| 52 | 8,64 | 7,68 | 6,72 | 5,76 | 4,80 | 3,84 | 2,88 | 1,92 | 0,96 |
| 56 | 5,36 | 4,77 | 4,18 | 3,59 | 3,00 | 2,41 | 1,82 | 1,23 | 0,64 |
| 60 | 3,68 | 3,30 | 2,92 | 2,54 | 2,16 | 1,78 | 1,40 | 1,02 | 0,64 |
| 64 | 2,64 | 2,35 | 2,06 | 1,77 | 1,48 | 1,19 | 0,90 | 0,61 | 0,32 |
| 68 | 1,36 | 1,23 | 1,10 | 0,97 | 0,84 | 0,71 | 0,58 | 0,45 | 0,32 |
| 72 | 0,32 | 0,28 | 0,24 | 0,20 | 0,16 | 0,12 | 0,08 | 0,04 | 0,00 |
| 76 | 0,00 | 0,00 | 0,00 | 0,00 | 0,00 | 0,00 | 0,00 | 0,00 | 0,00 |

Komponenten: Dauergabe mit Abgabe-Maximum bei 10 Tagen entsprechend Beispiel 2
Termingabe mit Abgabe-Maximum bei 44 Tagen entsprechend Beispiel 3

Vorstand: Dr. Herbert Asmis · Dr. Christian Bruhn · Hans-Jürgen Hamann
Dr. Heinz Haense · Karl Otto Mittelstenscheid · Dr. Horst Witzel
Vorsitzender des Aufsichtsrats: Dr. Eduard v. Schwartzkoppen

Postanschrift: SCHERING AG · D-1 Berlin 65 · Postfach 65 03 11
Postscheck-Konto: Berlin-West 1175-101, Bankleitzahl 100 100 10
Postscheck-Konto: Berlin, Konto-Nr. 108 700 600, Bankleitzahl 100 400 00
Berliner Commerzbank AG, Berlin, Konto-Nr. ..., Bankleitzahl 100 400 00
Berliner Disconto-Bank AG, Berlin, Konto-Nr. 241/5000, Bankleitzahl 100 700 00

SCHERING AG
Gewerblicher Rechtsschutz

SCHERING AG
Gewerblicher Rechtsschutz

**B e i s p i e l  5:** Vergleich eines erfindungsgemäßen Düngemittels mit einem Düngemittel nach dem Stand der Technik an Topf-Chrysanthemen "Yellow Delaware" - Tabelle 6 - und an Paprika "Rumba" - Tabelle 7. Verglichen werden Substratanalysen während der Kultivationszeit und Sproßbonituren bzw. Fruchterträge.

Als Düngemittel nach dem Stand der Technik wurden eingesetzt:

Düngemittel A: Langzeitdünger mit Betonung der Jungpflanzen-Ernährung der Zusammensetzung 20-10-15-4, Mechanismus der Langzeitwirkung auf biologischem Abbau beruhend.

Düngemittel B: Langzeitdünger mit Betonung der Dauerwirkung der Zusammensetzung 15-12-15, Mechanismus der Langzeitwirkung auf Membranhüllen beruhend.

Dagegen wurde getestet das erfindungsgemäße Düngemittel mit der folgenden Zusammensetzung C:

Langzeitdünger aus
25 % Startgabe gemäß Beispiel 1, Rez* Nr. 4,
63 % Dauergabe gemäß Beispiel 2, Rez* Nr. 5,
mit 10 % Hüllmenge aus 50 % Testbenzinlösung
auf Basis trocknender Öle in der Drehtrommel
hergestellt, zur Dauergabe in 100 Tagen,
2 % Termingabe gemäß Beispiel 3, Rez* Nr. 15,
Aufbereitung wie in Beispiel 4 beschrieben,
mit Abgabemaximum nach 44 Tagen.
An Hüllmaterial sind insgesamt 10 % eingesetzt.

* Rez. = Rezeptur

Formular-Nr.: 1438-2

Vorstand: Dr. Herbert Asmis · Dr. Christian Bruhn · Hans-Jürgen Hamann
Dr. Heinz Hannse · Karl Otto Mittelstenscheid · Dr. Horst Witzel
Vorsitzender des Aufsichtsrats: Dr. Eduard v. Schwartzkoppen
Sitz der Gesellschaft: Berlin und Bergkamen
Handelsregister: AG Charlottenburg 93 HRB 283 u. AG Kamen HRB 0061

Postanschrift: SCHERING AG · D-1 Berlin 65 · Postfach 65 03 11
Postscheck-Konto: Berlin-West 1175-101, Bankleitzahl 100 100 10
Berliner Commerzbank AG, Berlin, Konto-Nr. 108 7006 00, Bankleitzahl 100 400 00
Berliner Disconto-Bank AG, Berlin, Konto-Nr. 241/5008, Bankleitzahl 100 700 00
Berliner Handels-Gesellschaft — Frankfurter Bank —, Berlin,
Konto-Nr. 14-362, Bankleitzahl 100 202 00

S4 FH IV 35718

Formular-Nr.: 1439-2

Tabelle 6: Bodenanalysen und Sproßbonituren an Topf-Chrysanthemen "Yellow Delaware" bei unterschiedlicher Düngung

Bodenanalysen nach Tagen: 1/14/20/40/53/69

| Düngung 900 mg N/l | Dosis (kg/m³) | mg Salz/l | mg N/l | mg $P_2O_5$/l | mg/$K_2O$/l | Sproßbonituren nach 30 Tagen PT | nach 70 Tagen zur Verkaufsreife | | |
|---|---|---|---|---|---|---|---|---|---|
| | | | | | | | PT | LA | PX |
| Düngemittel A 20-10-15 | 4.5 | 2140/1870/2010/ 1120/ 930/ 980 | 339/554/538/ 148/ 25/ 36 | 445/470/381/ 232/162/ 36 | 850/787/544/ 96/ 38/22 | 83[x) | 80 | 87 | 85 |
| Düngemittel B[xx) 15-12-15 | 6.0 | 940/1210/1100/ 750/980/1660 | 222/279/216/ 46/ 20/ 56 | 104/110/123/ 78/ 72/ 95 | 144/209/108/ 32/ 92/119 | 83 | 82 | 78 | 82 |
| Düngemittel C 16-11-14 | 5.6 | 1500/1640/1680/ 920/1100/1360 | 229/454/403/ 79/ 14/ 58 | 212/323/292/ 117/149/176 | 328/436/368/ 52/104/139 | 93 | 92 | 83 | 87 |

[x) = zum Beispiel 83 von max. 100 erreichbaren Punkten

[xx) = Versuchsglied enthält zusätzlich 100 g Spurenelemente/m³ Substrat

PT = Wuchsleistung

LA = Blütenentwicklung

PX = Allgemeiner Zustand; diese Bonitur zum Zeitpunkt der Verkaufsfertigkeit beinhaltet die Kriterien Wuchsleistung, Sproßhabitus, Qualität der Blätter und Blüten sowie Blütenquantität.

Vorstand: Dr. Herbert Asmis · Dr. Christian Bruhn · Hans-Jürgen Hamann · Dr. Heinz Hansse · Karl Otto Mittelstenscheid · Dr. Horst Witzel
Vorsitzender des Aufsichtsrats: Dr. Eduard v. Schwartzkoppen
Sitz der Gesellschaft: Berlin und Bergkamen
Handelsregister: AG Charlottenburg 93 HRB 283 u. AG Kamen HRB 0061

Postanschrift: SCHERING AG · D-1 Berlin 65 · Postsch 65 03 11
Postscheck-Konto: Berlin-West 1175-101, Bankleitzahl 100 100 10
Berliner Commerzbank AG, Berlin, Konto-Nr. 109 7005 00, Bankleitzahl 100
Berliner Disconto-Bank AG, Berlin, Konto-Nr. 241/5008, Bankleitzahl 100
Berliner Handels-Gesellschaft — Frankfurter Bank —, Berlin,
Konto-Nr. 14-362, Bankleitzahl 100 202 00

54 FH N

0128376
SCHERING AG
Gewerblicher Rechtsschutz

Tabelle 7: Bodenanalysen und Fruchtertrag an Paprika "Rumba" bei unterschiedlicher Düngung

Bodenanalysen nach Tagen: 1/18/31/55/75/100

| Düngung | Dosis (kg/m$^3$) | mg Salz/l | mg N/l | mg P$_2$O$_5$/l | mg/K$_2$O/l | Fruchtertrag absolut (kg) | relativ (%) |
|---|---|---|---|---|---|---|---|
| Düngemittel A 20-10-15 | 4.0 | 830/1740/961/ 680/690/380 | 131/371/174/ 74/ 65/ 20 | 363/331/216/ 187/128/ 88 | 292/280/77/ 22/ 34/ 18 | 66 | 100 |
| Düngemittel B[x]) 15-12-15 | 5.3 | 760/1350/1301/ 1120/1470/ 620 | 92/213/196/ 126/146/ 56 | 67/145/164/ 161/198/131 | 74/128/ 96/ 168/218/ 77 | 67 | 101 |
| Düngemittel C 16-11-14 | 5.0 | 900/1260/1207/ 710/800/660 | 144/211/189/ 57/ 96/ 91 | 259/241/304/ 132/157/226 | 158/190/104/ 66/ 96/ 73 | 74 | 112 |

[x]) = Versuchsglied enthält zusätzlich 100 g Spurenelemente/m$^3$ Substrat

Formular-Nr.: 1439-2

Vorstand: Dr. Herbert Asmis · Dr. Christian Bruhn · Hans-Jürgen Hamann
Dr. Heinz Hannse · Karl Otto Mittelstenscheid · Dr. Horst Witzel
Vorsitzender des Aufsichtsrats: Dr. Eduard v. Schwartzkoppen
Sitz der Gesellschaft: Berlin und Bergkamen
Handelsregister: AG Charlottenburg 93 HRB 283 u. AG Kamen HRB 0061

Postanschrift: SCHERING AG · D-1 Berlin 65 · Postfach 65 03 11
Postscheck-Konto: Berlin-West 1175-101, Bankleitzahl 100 100 10
Berliner Commerzbank AG, Berlin, Bankleitzahl 100 400 00
Berliner Disconto-Bank AG, Berlin, Konto-Nr. 108 7006 00, Bankleitzahl 100 400 00
Berliner Handels-Gesellschaft — Frankfurter Bank —, Berlin, Konto-Nr. 241/5008, Bankleitzahl 100 700 00
Konto-Nr. 14-362, Bankleitzahl 100 262 00

SCHERING AG
Gewerblicher Rechtsschutz

P A T E N T A N S P R Ü C H E

1. Düngemittel mit Langzeitwirkung und programmierter Nährstoffabgabe, dadurch gekennzeichnet, daß dieses alle für die Ernährung von Pflanzen erforderlichen Nährstoffe einer Kulturperiode in partiell oder vollständig umhüllter Form enthält.

2. Düngemittel gemäß Anspruch 1, dadurch gekennzeichnet, daß dieses als Nährstoffe, Kohlenstoff, Sauerstoff, Wasserstoff, Stickstoff, Phosphor, Kalium, Magnesium, Calcium, Schwefel, Eisen, Mangan, Kupfer, Zink, Chlor, Bor, Molybdän, Natrium, Silicium, Kobalt und/oder Aluminium, zweckmäßigerweise in Form ihrer Verbindungen, enthält.

3. Düngemittel gemäß Anspruch 1, dadurch gekennzeichnet, daß die Nährstoffe mit wasserabweisenden Mitteln aus der Gruppe der Paraffine, der Wachse, der Metallseifen, der quartären Ammonium-Verbindunge, der Harnstoffderivate, der fettsäuremodifizierten Harze, der Silicone und/oder der perfluorierten organischen Verbindungen umhüllt sind.

4. Düngemittel gemäß Anspruch 3, dadurch gekennzeichnet, daß es sich bei dem wasserabweisenden Mittel um Eisenpalmitat handelt.

5. Düngemittel gemäß Anspruch 1, dadurch gekennzeichnet, daß die Nährstoffe mit wasserschwerlöslichen oder in Wasser quellenden Mittel aus der Gruppe der Polymere mit wasserbenetzenden Gruppen umhüllt sind.

6. Düngemittel gemäß Anspruch 5, dadurch gekennzeichnet, daß es sich bei den wasserschwerlöslichen oder in Wasser

Vorstand: Dr. Herbert Asmis · Dr. Christian Bruhn · Hans-Jürgen Hamann
Dr. Heinz Hannse · Karl Otto Mittelstenscheid · Dr. Horst Witzel
Vorsitzender des Aufsichtsrats: Dr. Eduard v. Schwartzkoppen
Sitz der Gesellschaft: Berlin und Bergkamen
Handelsregister: AG Charlottenburg 93 HRB 283 u. AG Kamen HRB 0061

Postanschrift: SCHERING AG · D-1 Berlin 65 · Postfach 65 03 11
Postscheck-Konto: Berlin-West 1175-101, Bankleitzahl 100 100 10
Berliner Commerzbank AG, Berlin, Konto-Nr. 106 700 00, Bankleitzahl 100 400 00
Berliner Disconto-Bank AG, Berlin, Konto-Nr. 241/5008, Bankleitzahl 100 700 00
Berliner Handels-Gesellschaft — Frankfurter Bank —, Berlin,
Konto-Nr. 14-362, Bankleitzahl 100 202 00

S4 FH IV 35718

quellenden Mitteln um Polymere mit wasserbenetzenden Gruppen handelt.

7. Düngemittel gemäß Ansprüchen 5 und 6, dadurch gekennzeichnet, daß es sich bei den wasserbenetzenden Gruppen um Hydroxyl-, Carboxyl-, Alkylester-, Cyan-, Chlor- oder Fluorgruppen handelt.

8. Düngemittel gemäßen Ansprüchen 5 und 6, dadurch gekennzeichnet, daß es sich bei den wasserschwerlöslichen oder wasserquellenden Mitteln um Polyvinylalkohole, vorzugsweise mit einem Restacetylgehalt von 10 % handelt.

9. Düngemittel gemäß Anspruch 1, dadurch gekennzeichnet, daß die Nährstoffe mit wasserschwerlöslichen Mitteln aus der Gruppe der anorganischen Verbindungen umhüllt sind.

10. Düngemittel gemäß Anspruch 9, dadurch gekennzeichnet, daß es sich bei der wasserschwerlöslichen Verbindung um Eisenphosphat oder Calciumphosphat handelt.

11. Düngemittel gemäß Anspruch 1, dadurch gekennzeichnet, daß die Nährstoffe mit wasserschwerlöslichen und/oder in Wasser quellenden Mitteln aus der Gruppe der Polymere mit wasserbenetzenden Gruppen oder aus der Gruppe der anorganischen Verbindungen und mit wasserabweisenden Mitteln aus der Gruppe der Paraffine, der Wachse, der Metallseifen, der quartären Ammonium-Verbindungen, der Harnstoffderivate, der fettsäuremodifizierten Harze, der Silicone und/oder perfluorierten organischen Verbindungen umhüllt sind.

Vorstand: Dr. Herbert Asmis · Dr. Christian Bruhn · Hans-Jürgen Hamann
Dr. Heinz Hannse · Karl Otto Mittelstenscheid · Dr. Horst Witzel
Vorsitzender des Aufsichtsrats: Dr. Eduard v. Schwartzkoppen
Sitz der Gesellschaft: Berlin und Bergkamen
Handelsregister: AG Charlottenburg 93 HRB 283 u. AG Kamen HRB 0061

Postanschrift: SCHERING AG · D-1 Berlin 65 · Postfach 65 03 11
Postscheck-Konto: Berlin-West 1175-101, Bankleitzahl 100 100 10
Berliner Commerzbank AG, Berlin, Konto-Nr. 108 7006 00, Bankleitzahl 100 400 00
Berliner Disconto-Bank AG, Berlin, Konto-Nr. 241/5008, Bankleitzahl 100 700 00
Berliner Handels-Gesellschaft — Frankfurter Bank —, Berlin,

12. Düngemittel gemäß Anspruch 3, dadurch gekennzeichnet, daß das wasserabweisende Mittel die Nährstoffe in einer Schichtdicke von $10^{-8}$m bis $10^{-2}$m, vorzugsweise von

$1 \cdot 10^{-5}$m bis $2 \cdot 10^{-3}$m umhüllt.

13. Düngemittel gemäß Anspruch 5, dadurch gekennzeichnet, daß das wasserschwerlösliche oder in Wasser quellende Mittel die Nährstoffe in einer Schichtdicke von $10^{-6}$m bis $10^{-2}$m, vorzugsweise von $5 \cdot 10^{-5}$m bis $2 \cdot 10^{-3}$m umhüllt.

14. Verfahren zur programmierten langfristigen Abgabe von Nährstoffen für Pflanzen in Böden durch Einbringen von Düngemitteln in die Böden, dadurch gekennzeichnet, daß Düngemittel gemäß Ansprüchen 1 bis 13 verwendet werden, wobei der Nährstofffluß in Abhängigkeit von der jeweiligen Entwicklung und/oder dem Bedarf der Pflanzen erfolgt.

15. Verfahren zur programmierten langfristigen Abgabe von Nährstoffen für Pflanzen in Substraten durch Einbringen von Düngemitteln in Substrate, dadurch gekennzeichnet, daß Düngemittel gemäß Ansprüchen 1 bis 13 verwendet werden, wobei der Nährstofffluß gezielt erst nach Bewässern der Substrat-Düngermischungen einsetzt.

16. Verfahren zur programmierten langfristigen Abgabe von Nährstoffen für Pflanzen auf Substraten, dadurch gekennzeichnet, daß Düngemittel gemäß Ansprüchen 1 bis 13, verwendet werden, wobei eine einmalige Düngemittelapplikation zu Beginn des Pflanzenwachstums ausreichend ist für den jeweiligen Bedarf der Pflanze einer Kulturperiode.

Formular-Nr.: 1439-2

Vorstand: Dr. Herbert Asmis · Dr. Christian Bruhn · Hans-Jürgen Hamann
Dr. Heinz Hannse · Karl Otto Mittelstenscheid · Dr. Horst Witzel
Vorsitzender des Aufsichtsrats: Dr. Eduard v. Schwartzkoppen
Sitz der Gesellschaft: Berlin und Bergkamen
Handelsregister: AG Charlottenburg 93 HRB 283 u. AG Kamen HRB 0061

Postanschrift: SCHERING AG · D-1 Berlin 65 · Postfach 65 03 11
Postscheck-Konto: Berlin-West 1175-101, Bankleitzahl 100 100 10
Berliner Commerzbank AG, Berlin, Konto-Nr. 108 7006 00, Bankleitzahl 100 400 00
Berliner Disconto-Bank AG, Berlin, Konto-Nr. 241/5006, Bankleitzahl 100 700 00
Berliner Handels-Gesellschaft — Frankfurter Bank —, Berlin,
Konto-Nr. 14-362, Bankleitzahl 100 202 00

54 FH IV 3571R

17. Verfahren zur gesteuerten Abgabe von Nährstoffen für Pflanzen auf Substraten, dadurch gekennzeichnet, daß Düngemittel gemäß Ansprüchen 1 bis 13 verwendet werden, wobei die Steuerung dem Nährstoffbedarf und/oder der Entwicklung der Pflanzen so angepaßt ist, daß eine Überdüngung und/oder unzulässige Auswaschungsverluste, vermieden werden.

18. Verfahren zur Herstellung von Düngemitteln gemäß Ansprüchen 1 bis 13, dadurch gekennzeichnet, daß man das in seiner Nährstoffreisetzung zu beeinflussende Düngemittel in einem für die jeweilige Art der Behandlung geeigneten Aggregat vorlegt und mit dem Behandlungsmittel derart versetzt, daß das Düngemittel vollständig und ausreichend gleichmäßig bis zur gewünschten Schichtdicke umhüllt wird oder daß man das Behandlungsmittel in einem geeigneten Aggregat vorlegt und das in seiner Nährstoffreisetzung erfindungsgemäß zu beeinflussende Düngemittel derart einträgt, daß das Düngemittel vollständig und ausreichend gleichmäßig mit der gewünschten Schichtdicke umhüllt wird.

19. Verfahren zur Herstellung von Düngemitteln, dadurch gekennzeichnet, daß die Düngemittel gemäß Ansprüchen 1 bis 13 einzeln oder in Mischungen verwandt werden.

Vorstand: Dr. Herbert Asmis · Dr. Christian Bruhn · Hans-Jürgen Hamann
Dr. Heinz Hannse · Karl Otto Mittelstenscheid · Dr. Horst Witzel
Vorsitzender des Aufsichtsrats: Dr. Eduard v. Schwartzkoppen
Sitz der Gesellschaft: Berlin und Bergkamen
Handelsregister: AG Charlottenburg 93 HRB 283 u. AG Kamen HRB 0061

Postanschrift: SCHERING AG · D-1 Berlin 65 · Postfach 65 03 11
Postscheck-Konto: Berlin-West 1175-101, Bankleitzahl 100 100 10
Berliner Commerzbank AG, Berlin, Konto-Nr. 108 7006 00, Bankleitzahl 100 400 00
Berliner Disconto-Bank AG, Berlin, Konto-Nr. 241/5008, Bankleitzahl 100 700 00
Berliner Handels-Gesellschaft – Frankfurter Bank –, Berlin,
Konto-Nr. 14-362, Bankleitzahl 100 202 00

Formular-Nr.: 1439-2

0128376

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | FR-A-1 188 809  (LECAT) <br><br> * Insgesamt * <br><br> --- | 1-3,5, 11,14-19 | C 05 G  1/00 <br> C 05 G  3/00 |
| P,X | FR-A-2 520 733  (SCHERING) <br> * Insgesamt * <br><br> ----- | 1-19 | |

RECHERCHIERTE SACHGEBIETE (Int. Cl. ³)

C 05 C
C 05 G

Der vorliegende Recherchenbericht wurde für alle Patentansprüche erstellt.

| Recherchenort <br> DEN HAAG | Abschlußdatum der Recherche <br> 11-09-1984 | Prüfer <br> VERHOEST J.P.M. |
|---|---|---|